# EUROPEAN PATENT APPLICATION

(11) **EP 4 629 561 A1**
(43) Date of publication of application: **08.10.2025**
(21) Application number: 25166349.8
(22) Date of filing: 26.03.2025
(51) Int. Cl.: H04L 9/32, H04L 9/00

(54) **METHODS AND COMPUTER SYSTEMS FOR JOINING A BLOCKCHAIN NETWORK**

(30) Priority: 02.04.2024 FI 20245382
(71) Applicant: Nokia Solutions and Networks Oy, 02610 Espoo (FI)
(72) Inventor: CHAPELET, Ludovic Florent Eric, 69007 Lyon (FR); DELÈGUE, Gérard, 92340 Bourg-la-Reine (FR); LEGAT, Bruno, 91080 Evry-Courcouronnes (FR); FUIN, Félix, 78180 Montigny-le-Bretonneux (FR)
(74) Representative: Nokia EPO representatives

(57) **Abstract**

A computing system configured for implementing at least one node of a blockchain network based on a permissioned blockchain. The computer system may: receives a join request from an entity requesting to join the blockchain network by connecting a new node to the blockchain network; triggers an evaluation process of the join request, wherein the evaluation process includes an automated evaluation performed using at least one smart contract registered in the permissioned blockchain and configured to verify compliance of the join request with membership rules; provides a response to the join request based on results of the evaluation process.

## Description

### TECHNICAL FIELD

Various embodiments relate generally to a computer system (and corresponding method) for processing a join request for joining a blockchain network, and a computer system (and corresponding method) for joining to a blockchain network.

### BACKGROUND

Blockchain technology has already been applied to many fields, including financial services, medicine, internet of things (IoT), software engineering, e-government and public services, education.

Blockchain technology may be used for implementing a Decentralized Autonomous Organization (DAO), i.e., an organization with no central leadership. Decisions get made from the bottom-up, governed by a community of entities organized around a specific set of rules enforced on a blockchain. DAOs can automate these processes based on a community consensus.

DAOs can be utilized for various use cases. DAOs may be used for collective investment decisions, for managing content creation, intellectual property rights, for managing revenue distribution in a decentralized manner, for managing any type of transaction between companies.

The integration of new members into a DAO proves to be a complex endeavor. In the context of Industry 4.0, these new members typically include industrial entities and enterprises that seek to join a consortium with the purpose of jointly offering shared services to other industrials or end-users.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method for use by a first computing system hosting at least one node in a blockchain network based on a permissioned blockchain is disclosed. The method comprises: receiving a join request from an entity requesting to join the blockchain network by connecting a new node to the blockchain network; triggering an evaluation process of the join request, wherein the evaluation process includes an automated evaluation performed using at least one smart contract registered in the permissioned blockchain and configured to verify compliance of the join request with membership rules; providing a response to the join request based on results of the evaluation process.

According to another aspect, a first computing system is configured for hosting at least one node of a blockchain network based on a permissioned blockchain. The first computing system comprises means for: receiving a join request from an entity requesting to join the blockchain network by connecting a new node to the blockchain network; triggering an evaluation process of the join request, wherein the evaluation process includes an automated evaluation performed using at least one smart contract registered in the permissioned blockchain and configured to verify compliance of the join request with membership rules; providing a response to the join request based on results of the evaluation process.

The memberships rules may be related to rights and functions in the blockchain network requested by the requesting entity and/or to the performances of a second computing system configured to host the new node.

The first computing system may comprise means for receiving a digital certificate, identity information for the entity and requirements of the new node to be created, the requirements comprising at least one of: rights to perform transactions in the blockchain network; rights to perform a consensus algorithm for validating transactions in the blockchain network; rights to register transactions to read or write data blocks in the blockchain; an identification of one or more channels in the blockchain network to which the new node requests access; rights to add ordering service endpoints to participate to consensus.

The evaluation process may include at least one of a verification of the identity of the entity on the basis of identity information or a validity check of the digital certificate.

The first computing system may comprise means for: accepting the join request if the results of the evaluation process indicates that the join request is acceptable; allocating rights on the permissioned blockchain to the entity; allocating rights on the one or more channels to the entity; sending to a second computing system of the entity a copy of a ledger of the blockchain network; sending, to the second computing system of the entity, a smart contract software or a consensus algorithm code to be run at the second computing system.

The first computing system may comprise means for: sending, to the second computing system, private data to be stored in a local private database of the new node.

The first computing system may comprise means for: submitting the join request to a collective evaluation process involving users of nodes of the blockchain network, the collective evaluation process being performed using at least one smart contract registered in the permissioned blockchain; taking a decision to accept or reject the join request based on the results of the evaluation process including results of the collective evaluation process and results of the automated evaluation.

The join request may be submitted to the collective evaluation process only when the results of the automated evaluation indicates that the join request is not acceptable or needs further evaluation.

The results of the collective evaluation process may include a number of users having accepted or rejected the join request and the decision is taken based at least on the results of the collective evaluation process and on a consensus rule to be met to accept the join request.

The first computing system may comprise means for: generating a report of the evaluation process including the results of assessments performed by the at least one smart contract during the evaluation process and reasons for compliance or non-compliance with membership rules; and registering the report in a data block in a ledger of the permissioned blockchain.

The first computing system may comprise means for performing one or more or all steps of the method according to the first aspect. The means may include at least one processor and at least one memory storing instructions that, when executed by the at least one processor, cause the first computing system to perform one or more or all steps of a method according to the first aspect. The means may include circuitry (e.g., processing circuitry) to perform one or more or all steps of a method according to the first aspect.

According to another aspect, a computing system may comprise at least one processor and at least one memory storing instructions that, when executed by the at least one processor, cause the computing system to carry out at least: receiving a join request from an entity requesting to join a blockchain network by connecting a new node to the blockchain network; triggering an evaluation process of the join request, wherein the evaluation process includes an automated evaluation performed using at least one smart contract registered in a permissioned blockchain and configured to verify compliance of the join request with membership rules; providing a response to the join request based on results of the evaluation process. The instructions, when executed by the at least one processor, may cause the computing system to perform one or more or all steps of a method according to the first aspect.

According to another aspect, a computer program comprises instructions that, when executed by a computing system, cause the computing system to perform: receiving a join request from an entity requesting to join a blockchain network by connecting a new node to the blockchain network; triggering an evaluation process of the join request, wherein the evaluation process includes an automated evaluation performed using at least one smart contract registered in a permissioned blockchain and configured to verify compliance of the join request with membership rules; providing a response to the join request based on results of the evaluation process.

According to another aspect, a non-transitory computer readable medium comprises program instructions stored thereon for causing a computing system to perform at least the following: receiving a join request from an entity requesting to join a blockchain network by connecting a new node to the blockchain network; triggering an evaluation process of the join request, wherein the evaluation process includes an automated evaluation performed using at least one smart contract registered in a permissioned blockchain and configured to verify compliance of the join request with membership rules; providing a response to the join request based on results of the evaluation process. The program instructions may cause the computing system to perform one or more or all steps of a method according to the first aspect.

According to a second aspect, a method comprises: sending a join request to a first computing system, the first computing system hosting a node of a blockchain network based on a permissioned blockchain, wherein the join request is to join the blockchain network by connecting a new node hosted by the second computing system to the blockchain network; receiving, from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules.

According to another aspect, a second computing system comprises means for: sending a join request to a first computing system, the first computing system hosting a node of a blockchain network based on a permissioned blockchain, wherein the join request is to join the blockchain network by connecting a new node hosted by the second computing system to the blockchain network; receiving, from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules.

The second computing system may comprise means for: receiving a copy of a ledger of the blockchain network if the joined request is accepted; storing the copy of the ledger in the second computing system.

The second computing system may comprise means for: receiving a smart contract software or a consensus algorithm code if the joined request is accepted; operatively communicating with one or more nodes in the blockchain network; and executing the smart contract software or the consensus algorithm code.

The means may be adapted for performing one or more or all steps of the method according to the second aspect. The means may include at least one processor and at least one memory storing instructions that, when executed by the at least one processor, cause the second computing system to perform one or more or all steps of a method according to the second aspect. The means may include circuitry (e.g., processing circuitry) to perform one or more or all steps of a method according to the second aspect.

According to another aspect, a second computing system comprises at least one processor and at least one memory storing instructions that, when executed by the at least one processor, cause the second computing system to carry out at least: sending a join request to a first computing system, the first computing system hosting a node of a blockchain network based on a permissioned blockchain, wherein the join request is to join the blockchain network by connecting a new node hosted by the second computing system to the blockchain network; receiving, from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules. The instructions, when executed by the at least one processor, may cause the second computing system to perform one or more or all steps of a method according to the second aspect.

According to another aspect, a computer program comprises instructions that, when executed by a second computing system, cause the second computing system to perform: sending a join request to a first computing system, the first computing system hosting a node of a blockchain network based on a permissioned blockchain, wherein the join request is to join the blockchain network by connecting a new node hosted by the second computing system to the blockchain network; receiving, from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules. The instructions may cause the second computing system to perform one or more or all steps of a method according to the second aspect.

According to another aspect, a non-transitory computer readable medium comprises program instructions stored thereon for causing a second computing system to perform at least the following: sending a join request to a first computing system, the first computing system hosting a node of a blockchain network based on a permissioned blockchain, wherein the join request is to join the blockchain network by connecting a new node hosted by the second computing system to the blockchain network; receiving, from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules. The program instructions may cause the second computing system to perform one or more or all steps of a method according to the second aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 shows a schematic and simplified representation of a communication system for blockchains according to an example.
FIG. 2 provides a simplified functional view of a computing system adapted for a blockchain network according to an example.
FIG. 3 provide a schematic representation of a process for evaluating a join request according to example embodiments.
FIG. 4 provides a simplified functional view of a peer node configured to perform an evaluation process of a join request according to an example.
FIG. 5 is a flowchart illustrating a method for processing a join request for joining a blockchain network according to an example.
FIG. 6 is a flowchart illustrating a method for performing an automated evaluation of a join request for joining a blockchain network according to an example.
FIG. 7 is a flowchart illustrating a method for performing a collective evaluation of a join request for joining a blockchain network according to an example.
FIG. 8 is a flowchart illustrating a method for processing a join request for joining a blockchain network according to an example.
FIG. 9 is a flowchart illustrating a method for joining to a blockchain network according to an example.
FIG. 10 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

A blockchain network relies on a distributed computing infrastructure where every network node executes and registers the same transactions in a digital ledger using a blockchain. A data block in the blockchain may include data of one or more committed transactions. The core advantages of blockchain are decentralization, transparency, traceability, and that the blockchain is practically tamper-resistant.

The ledger is a distributed digital ledger maintained at multiple nodes and based on blockchain technology. The ledger is in the form of a chain of data blocks, each data block being linked to the preceding data block in the chain, such that an attempt to change one data block in the chain would necessitate a change to the next data block in the chain, and so on. The chain grows when new data blocks are appended to the chain, these data blocks corresponding to new transactions or sets of new transactions. New data blocks corresponding to new transactions are stored in the blockchain after a validation process that is specific to each blockchain.

Blockchains may be used to record any type of transactions. The term "transaction" may cover any type of operation between one or more entities (e.g., users, devices, organizations, etc). A transaction may relate to any type of physical or virtual product, physical or virtual service, device, component, package, physical or electronic document or file, asset, etc (including virtual assets such as data, electronic files, intangible assets or even cryptocurrency).

A consortium blockchain is a blockchain where a consensus process is controlled by a pre-selected set of nodes, where each node must sign every data block in the ledger in order for the data block to be valid. The consensus process determines which changes can be made to a copy of the ledger. A consensus process allows the distributed nodes to complete and validate a data exchange or transaction without the need for any third-party trusted authority. The nodes responsible for creating blocks based on the consensus process are called miners.

A consensus algorithm may for example be one or more of proof of authority (PoAuth), proof of stake (PoS), delegated proof of stake (DPoS), leased proof of stake (LPoS), proof of elapsed time (PoET), practical Byzantine fault tolerance (PBFT), simplified Byzantine fault tolerance (SBFT), delegated Byzantine fault tolerance (DBFT), proof of activity (PoA), proof of importance (Pol), proof of capacity (PoC), proof of burn (PoB), multi-signature (multisig) and/or proof of weight (PoWeight).

Smart contracts may be defined as computer programs designed to automate the execution of the terms of a machine-readable contract or agreement or transaction. Unlike a traditional contract which would be written in natural language, a smart contract is a machine executable program which comprises rules that can process inputs in order to produce output results, which can then cause actions to be performed dependent upon those output results.

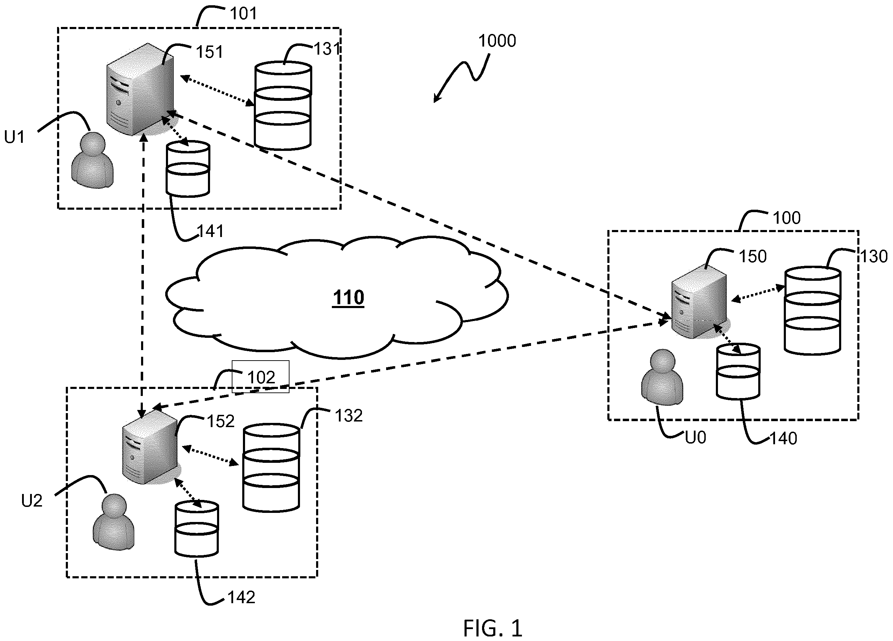

FIG. 1 shows a schematic and simplified representation of a communication system 1000 for blockchains, in the example of a decentralized architecture.

The communication system 1000 comprises a plurality of computing systems 100, 101, 102 that communicate with each other through at least one communication network 110.

Each computing system 100, 101, 102 is owned and/or managed by an entity, this entity being for example an organization (a company, an association, a university, etc), a physical person, a device, etc. All these entities are members of a community formed by the set of all members. A new member may join the community by connecting a new node to the blockchain network. The terms "entity" and "member" may be used herein interchangeably.

Each computing system 100, 101, 102 includes one or more physically separate computing devices 150, 151, 152, including software packages configured to execute blockchain functionalities and manage a respective blockchain 130, 131, 132. For simplicity, in the present description, only one computing device per computing system is represented but there may be as many computing devices as necessary in each computing system. A computing system 100, 101, 102 may further comprise a respective private database 140, 141, 142.

For example, the operations performed by a user U1 on a given blockchain 131 will be performed by means of the software packages, which will be executed by the computing device 151 of the computing system 101 associated with the entity to which belongs the user U1.

Each computing device 150, 151, 152 may on the whole have the architecture of a computer, and include components of such an architecture: one or more memories, one or more processors, a communication bus, one or more hardware interfaces for connecting this computing device to a communication network 110 or another piece of equipment, one or more user interfaces, etc.

A computing device 150, 151, 152 includes at least one node of a blockchain network, where the node is configured to communicate via the communication network 110 with the other nodes of the blockchain network in the computing systems 100, 101, 102. These nodes are generally organized in a peer-to-peer network. FIG. 1 presents an exemplary network illustrating the "decentralized" nature of the blockchain and the relationships between nodes of the network. This figure schematically illustrates one possible architecture of a network for exploiting and/or using one or more blockchains. Another architecture or infrastructure could be used.

Each node may be a full node or a light-weight node. If the node is a full node, the node stores locally (in one of the local data sets) all the data blocks of the blockchain 130, 131, 132: the data blocks are in this case duplicated as many times as there are nodes storing instance of the same blockchain.

When the blockchains 130, 131, 132 are instances of the same blockchain, a synchronization mechanism is implemented by the nodes for these instances 130, 131, 132 through the communication network 110. Via the synchronization mechanism implemented, when an instance of the blockchain is updated with one or more new data blocks, the other instances of the same blockchain may be updated by storing these new data blocks in the other instances respectively. In the case of light-weight nodes, this update may be limited solely to the considered new data blocks.

As an example, the following steps may be executed to register a new data block in a block chain:
1) New transactions are submitted to specific endorsing peers for endorsement.
2) Endorsing peers create transaction endorsements and return them to the client.
3) The client collects the endorsements and submits the endorsed transaction to the ordering service.
4) The ordering service orders endorsed transactions into blocks.
5) Each peer receives the ordered blocks and validates them against the endorsement policy.
6) Valid blocks are committed to the ledger, and the ledger state is updated.

Beside the peer-to-peer communication, channel(s) may be created in the blockchain network. In the context of a blockchain network, a channel is a private communication channel between two or more members, allowing these members to conduct transactions or share data privately and securely. Channels are useful in scenarios where certain members need to interact with each other without revealing their transactions or data to all members. For example, channels enable privacy by restricting access to a given channel to only the participating members. Transactions conducted within a channel are visible only to those members and not to the entire network. By limiting the scope of transactions to a specific set of members, channels can improve the performance of the blockchain network by reducing the overall transaction processing load. Channels may be customized to suit the specific requirements of the participating members. For example, the members can define their own policies, consensus mechanisms, and endorsement policies within the channel. Channels provide confidentiality by ensuring that transactions and data shared within the channel are encrypted and accessible only to authorized members. Channels can help in scaling the blockchain network by allowing different groups of participants to conduct transactions simultaneously without impacting the performance of the entire network. Overall, the channels in a blockchain network facilitate private and efficient communication and transaction processing among specific groups of members, enhancing the versatility and applicability of blockchain technology in various use cases.

For each member entity, at least one user U0, U1, U2 may have access to the computing system 100, 101, 102 and be allocated a user address.

In the case of a permissioned blockchain (i.e., with rights management), each computing system 100, 101, 102 implements functions for enrolling users, for allocating rights to the blockchain, for allocating user addresses, for controlling access to the blockchain based on rights assigned to the user addresses, for signing and recording transactions, for reading and writing data sets or data blocks, etc.

The rights to a blockchain are defined for the various user addresses of the permissioned blockchain. A user address corresponds to a personal identifier on the blockchain. Generally, a user may be allocated a plurality of user addresses, these user addresses being kept in a wallet.

Permissions (or user rights) define the rights allocated to a user address with respect to a permissioned blockchain. These rights indicate whether the user address is able to connect to the blockchain, whether the user address may send and/or receive transactions, and whether the user address has the ability to create assets, etc.

Examples of rights that may be granted to a user address on the permissioned blockchain may include:
- connection rights to connect to the blockchain; this set of rights includes read rights: a user may therefore read the data blocks of the blockchain;
- send rights to send new blockchain transactions (the connection rights being implicitly included);
- receive rights to receive new blockchain transactions (the connection rights being implicitly included);
- asset creation rights to create new assets in the blockchain (the send and receive right being implicitly included);
- block creation rights (or "miner" rights) to create new data blocks in the blockchain;
- administrator rights to give and withdraw various rights to/from any address;
- blockchain creator rights, which may include at least administrator rights.

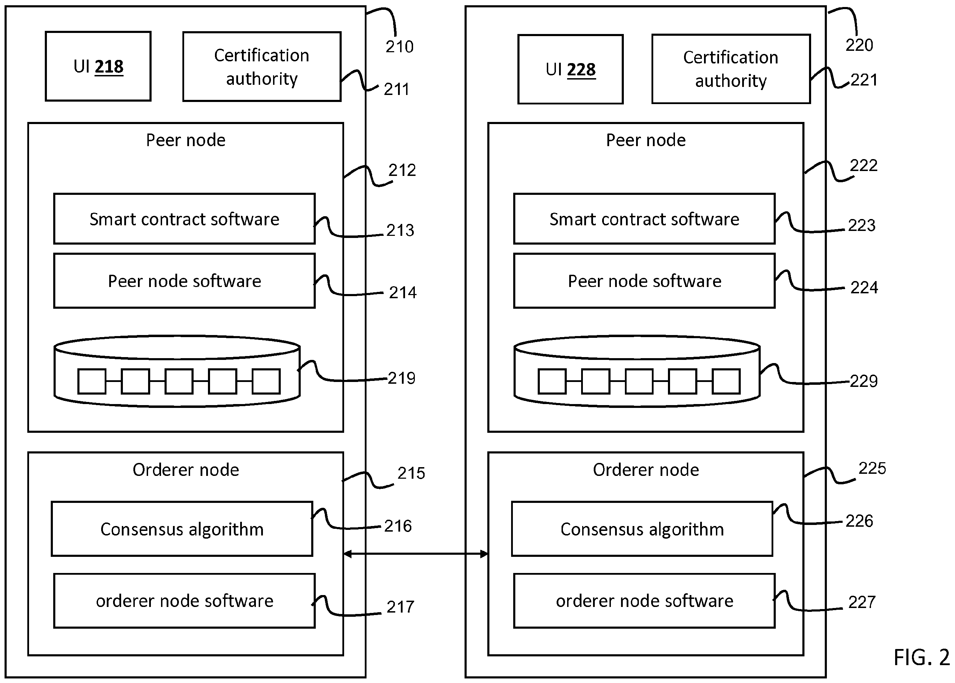

FIG. 2 provides a simplified functional view of a computing system 210, 220 adapted for a blockchain network according to an example.

For a given blockchain, a computing system 210, 220 (e.g., at least one computing device in the computing system) is configured with software packages 211-217, 221-227 (e.g., software instructions) implementing functions associated with the blockchain and adapted to be executed by one or more processors of one or more computing devices in the computing system.

Each computing system 210, 220 may include a peer node 212, 222 and/or an orderer node 215, 225 and/or a certification authority 211, 221.

A peer node 212, 222 may include software packages including a peer node software 214, 224 and a smart contract software 213, 223.

An orderer node 215, 225 may include software packages including an orderer node software 217, 227 and a consensus algorithm software 216, 226.

The peer node software 214, 224 is configured to perform functions of a peer node. A peer node is configured to maintain a copy of the ledger and smart contracts (or chaincode) and execute transactions. A peer node is configured to validate an endorse transactions by simulating them against the smart contracts and providing their signatures to indicate the validity of the transaction. A peer node is configured to maintain the current state of the ledger 219, 229 after each transaction is executed, updating the ledger 219, 229 accordingly. Peer nodes may be part of one or more channels, enabling the peer nodes to participate in private transactions through those channels.

Accordingly, the peer node software 214, 224 may be configured for writing / reading operations of data blocks in the ledger 219, 229, executing smart contracts and performing blockchain synchronization operations with the other instances of the blockchain in other nodes.

The ordered node software 217, 227 is configured to implement functions of an orderer node. An orderer node is configured to order transactions into data blocks and create a consistent order for transactions across all peers in the network. An orderer node may be configured to implement a consensus mechanism to agree on the order of transactions. This ensures that all peers in the network have the same transaction history. Once a data block is formed, an orderer node may broadcast the data block to all the peers within the relevant network channel for validation and committing.

Orderer nodes can be centralized or decentralized, depending on the network's requirements and consensus mechanism. Orderer nodes provide an ordering service (e.g., interaction service, with a delivery guarantee, such as instantaneous or complete order dissemination). The ordering service provides a common communication channel for users and peers, as well as a broadcasting function for transactional notifications. Users submit requests to a peer node. These requests are submitted to endorsing peers for endorsement before being ordered and committed to the ledger by the orderer nodes.

In summary, peer nodes 212, 222 primarily focus on executing transactions, maintaining the ledger 219, 229, and endorsing transactions, whereas orderer nodes 215, 225 concentrate on ordering transactions, implementing a consensus algorithm, and ensuring a consistent transaction order across the network.

The certification authority software 211, 221 is configured to perform function of a certification authority (CA). A CA is a trusted entity that issues digital certificates and private keys for entities, where the digital certificates are used to verify the identity of the entities and the authenticity and integrity of electronic communications and transactions. Each entity (or member or user of this entity) is assigned a unique cryptographic identity, often in the form of a public-private key pair. The cryptographic identity ensures the authenticity of the entity and provides a level of security against unauthorized access or malicious entities.

A computing system 210, 220 may also include a user interface software 218, 228. The user-interface software 218, 228is configured to implement user interface functionalities, e.g., to acquire user inputs and provide outputs to a user. The user interface software 218, 228 may be configured with request evaluation functions (e.g., voting functions) for evaluating a join request.

A decentralized application (dApp) may be used in the blockchain network and be configured to communicate via the peer-to-peer (P2P) networks to maintain its decentralized nature. To facilitate communication between nodes, dApps use decentralized protocols. These protocols define rules and conventions for how nodes interact with each other.

A dApp may be deployed anywhere. A dApp may for example be deployed on several nodes (e.g., on several computing systems hosting one or more nodes of the blockchain network) or on computing systems that do not host any blockchain node.

When a dApp needs to communicate with other nodes, the dApp first needs to discover them. Once nodes are discovered, the dApp establishes connections with them. This connection is typically done over the internet using standard networking protocols (e.g., TCP/IP) and through an application front end (e.g., e web page).

A dApp exploits the functionalities of the blockchain: a dApp may invoke smart contracts, use the blockchain's decentralized storage via smart contracts and may have a decentralized front-end, i.e. a front-end hosted on blockchain nodes.

Managing the acceptance of new members and their onboarding in the blockchain network involves numerous technological challenges. The main technical problems to be solved are the checking of criteria of the consortium implementing secure identity verification, onboarding processes, and efficient voting mechanisms in a decentralized way for the collective acceptance of new members.

The challenge is also in delegating the decision-making and management processes necessary to facilitate the evolution and maintenance of the blockchain based on the preferences and votes of DAO members. So, the problem to be solved is not only to ensure that the blockchain can use the DAO for its operation, but also to give the DAO the authority to supervise and govern the development of the blockchain, based on consensus and the choices of its members.

One or more example embodiments relate to methods and computing systems for processing a join request for joining a blockchain network by connecting a new node (e.g., a peer node) to a blockchain network.

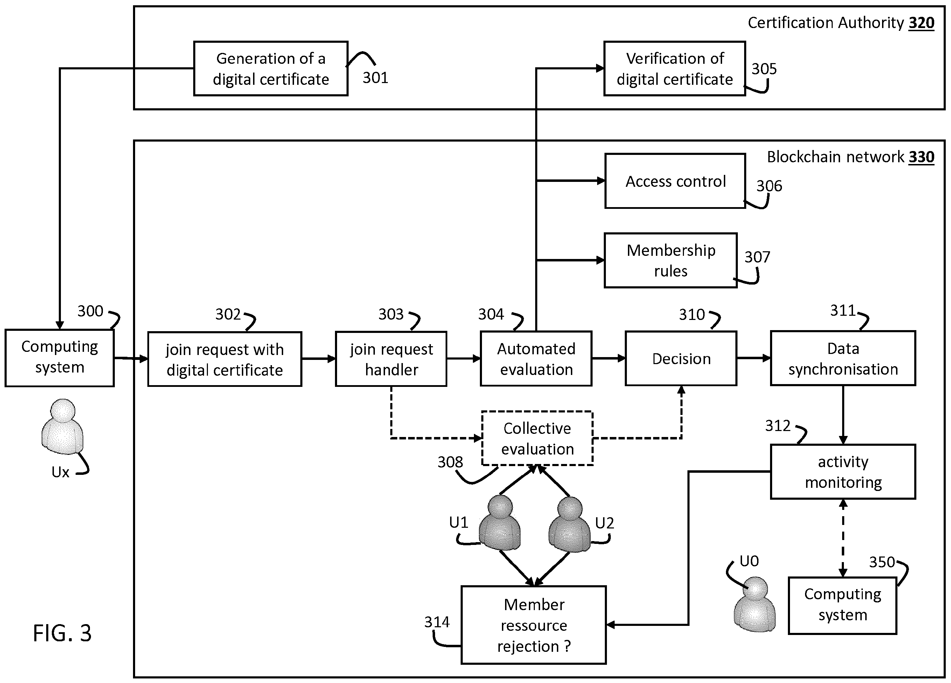

FIG. 3 provide a schematic representation of a process for evaluating a join request according to example embodiments.

In example use cases, the blockchain network may be used for performing transactions between members of a community (e.g., a consortium), where each member manages a computing system communicating through the blockchain network with other computing systems of the other members. In this context, a member may be any entity (e.g., an organization, a physical person, a device, etc.) which needs to perform transactions with other members.

To process join requests from new members wanting to join and access a blockchain network, a private permissioned blockchain is used with one or more dedicated smart contracts for processing the join requests. The smart contracts are registered in the permissioned blockchain. Further, the results of the evaluation performed by the smart contract(s) are also registered in the permissioned blockchain. Each new member is identified by a digital identity generated by a certification authority, set up a computing system (e.g., an infrastructure including computing device(s), a database, a ledger, etc) for hosting one or more nodes of the blockchain network and submit its join request to the blockchain network. The join request may be evaluated based on various membership compliance criteria, reflecting memberships rules of the community.

The membership compliance criteria (also referred to as the membership rules) may for example be related to rights and functions requested by the requesting entity: these membership compliance criteria may be verified based on a digital certificate of the requesting entity, the type of transactions the requesting entity is authorized to perform, the requested permissions on the blockchain and/or channels, the rights to participate to a consensus algorithm, etc.

Membership rules may for example specify the types of transactions that the requesting entity is authorized to perform on the blockchain network. For example, certain members may have permission to execute financial transactions, while others may be restricted to data storage operations. Some members may have read-only access to certain data, while others may have permission to modify or delete records. Different channels may have different purposes and access control rules, and membership eligibility may vary accordingly. Membership rules may specify the criteria for participating in the consensus algorithm such as reputation scores.

The membership compliance criteria may be related to performances of the computing system of the requesting entity: the performance or storage and processing capacity of the shared resources of the computing system, their reliability and the security of the computing system. The computing systems of the members may for example be regularly monitored to assess the performance of shared resources, their reliability and security. If the computing system of a member does not meet the consortium's expectations may be excluded following a decision by the consortium members.

Business-related criteria, for example related to industrial interests or field of activity of the requesting entity, may also be verified.

Depending on the join request and the information provided by the requesting entity, the join request may be accepted automatically or rejected immediately or examined by various members. In embodiments, the members may implement a collaborative evaluation process by means of which members of the community exercise their voting rights and influence within the community to decide whether to accept or not that the new member joins the community. The entity is thus authorized to connect its computing system to the blockchain network and run a new node that is part of the blockchain network.

Once the requesting entity is allowed to join the community, the new node is registered in the blockchain. The registration of membership nodes allows each new node to effectively join the blockchain network and access the blockchain and/or channels in dependence upon the rights allocated to the requesting entity. Before participating, nodes need to be registered to become part of the blockchain network. This registration process enables to maintain control over which entities can participate in the blockchain network.

A join request handler is configured to receive and process join requests from entities wishing to join the blockchain network. The join request handler interfaces with other software packages to evaluate and approve or reject the join requests. The join request handler may be implemented by one or more smart contracts configured to execute an evaluation process, in order to check the compliance with memberships rules.

As represented by FIG. 3, the method for connecting a new node in a computing system 300 of a new member (i.e., a requesting entity) to the blockchain network may include steps 301-311. The method involves a certification authority 320, one or more nodes (e.g., a peer node) of a blockchain network 330 and the computing system 300 of the requesting entity.

In step 301, a certification authority generates a digital certificate for the requesting entity requesting to join a blockchain network. The certification authority may be a decentralized certification authority of the requesting entity.

In step 302, a join request and the digital certificate of the requesting entity are received by the blockchain network, e.g., by at least one node of the blockchain network.

Depending on the functions the new member wants to perform, the join request may specify various requirements:
- rights to perform transactions in the blockchain network;
- rights to perform a consensus algorithm for validating transactions in the blockchain network;
- rights to register transactions to read or write data blocks in the blockchain;
- an identification of one or more channels in the blockchain network to which the new node requests access;
- rights to add ordering service endpoints to participate to consensus;
etc.

For example, a new node may request rights for endorsing, validating, and committing transactions and may be configured to have access to private, isolated, and secure channel between members.

For example, a new node may request rights for performing a consensus mechanism.

For example, a new node may request rights for updating a channel, may specifying changes for a set of members, enables the members to engage in confidential transactions and share data without disclosing the data to all members in the blockchain network.

For example, an entity wanting to connect a new node may request the setup of a cryptographic certificate to be able to encrypt and decrypt data block and/or transactions and/or channel.

For example, an entity wanting to connect a new node may request rights to interact with endpoints of the blockchain network.

In step 303, a join request handler processes the join request to determine whether the join request complies with memberships rules. This evaluation may include step 305 to 308. The evaluation is a smart contract-based evaluation.

In step 305, the join request handler may interact with the certification authority 320 which is tasked with the verification of the identity of the requesting entity, based on the digital certificate associated with the requesting entity.

In step 306, the join request handler may interact with an access control manager which determines the appropriate rights (to the blockchain and/or the channels) to be allocated to the requesting entity for the new node to be connected the blockchain network. Given that various nodes may have distinct roles and responsibilities in the blockchain network, the access control policies are applied according to the node's specific role. In step 306, it may be checked whether the requested rights comply with an access policy defined for the blockchain and/or the channels.

In step 307, a smart contract-based automated evaluation of membership rules is triggered. This mechanism ensures that predefined membership rules are enforced, contingent upon the network's configuration. These membership rules serve as a unanimous agreement among all members to govern the consortium. These rules could encompass constraints, such as only allowing specific entities (e.g., organizations, physical persons, devices, etc) to join or imposing limitations on the number of nodes with a particular role. The automated evaluation system enforces these membership rules to maintain the integrity and compliance of the blockchain network with membership rules (membership compliance criteria).

Based on the verifications in steps 305, 306, 307, the join request manager may decide to accept the join request from the new member, reject the join request, or submit the join request to a smart contract-based collective evaluation (step 308) by users U1, U2, hereafter the voting users. The voting users U1, U2 may be administrators of nodes of the blockchain network. The final decision (step 310) may be taken on the basis of the automated evaluation (step 307) alone, or on the basis of both the automated evaluation (step 307) and the collective evaluation (step 308).

If a join request necessitates the collective evaluation, a user interface adapted for manual review of the join request review is used. This manual review interface enables voting users to examine and, when required, actively participate in the evaluation process. Through this manual review interface, each voting user may vote (e.g., accept or refuse or by default abstain) on one or more requirements in the join request, ensuring that the join request aligns with the membership rules, e.g., network's security and the objectives of the consortium. The voting user may assess the credentials and information provided by the new member in the join request, ensuring they meet the required membership compliance criteria.

A report may be generated for the evaluation process. The report may include the results of the smart contract-based automated evaluation and the results of the votes of the voting users during the collective evaluation if carried out. The report may include reasons for compliance or non-compliance with membership rules, or a compliance status indicating if the join request complies or not with the membership rules.

The storage of this report makes it immutable and auditable. This feature makes the joining process transparent and indisputable for all consortium members.

The report is generated from the set of evaluations that have been performed in step 305, 306, 307 and 308 if executed. The report may include the result of the access control evaluation (306), identity verification (305), etc, making all this information readily accessible to the requesting entity or any authorized reader.

The report may include detailed evaluation results, e.g., the votes of each voting user. A vote of a voting user may be a vote for each of one or more requirements in the join request and/or a global decision of acceptance / rejection of the join request.

The report may include consolidated evaluation results, e.g., statistical data generated based on the votes of the voting users and/or a final decision for the join request. For example, the statistical data may include a number of voting users having approved / rejected the join request and / or number of voting users having approved / rejected a given requirement for one or some or each of the requirements in the join request.

The report may outline valid requirements of the join request, such as the addition of nodes for endorsing, validating, and committing transactions, and highlights the requirements of the join request that have been rejected, like the addition of nodes for the consensus mechanism. If some requirements in the join request are rejected, a new request must be submitted.

If the join request of the new member is approved, in step 311, a synchronization function takes charge of synchronizing the ledger data and the smart contract software with the computing system 300 of the new member. The peer node software and orderer node software may be publicly available and, in such a case, it is not necessary to provide these software packages to the computing system 300 of the new member. The synchronization is performed to guarantee that each new peer node possesses a current, synchronized copy of the ledger. Additionally, the synchronization function may configure the computing system 300 of the new member to allow the computing system 300 to access to one or more channels based on the requirements in the join request. Thereby the new member and its computing system and nodes are seamlessly connected to the blockchain network.

Once the synchronization is completed, the computing system 300 is operatively connected to the blockchain network.

Optional steps 312 and 314 may be performed.

In step 312, resources of the computing systems 350 of members may be monitored by a membership activity monitoring function. The membership activity monitoring function may perform automated tests and analysis to determine whether the nodes of in computing systems 350 of members meet performance requirements and/or reliability requirements and/or security requirements.

In step 314, a membership resource rejection function may be triggered. The membership resource rejection provides the capability to exclude one or more nodes, one or more computing systems or one or more members from the consortium. The decision is made collectively, typically after a consensus is reached by enough users (e.g., voting users U1, U2) who endorse such responsibility. The membership resource rejection function may determine whether there is enough number of concurring decisions of voting users U1, U2 to support the exclusion of a member or node or computing system. Subsequently, the membership resource rejection function may autonomously reconfigure the rights on the channel to enforce a decision of exclusion.

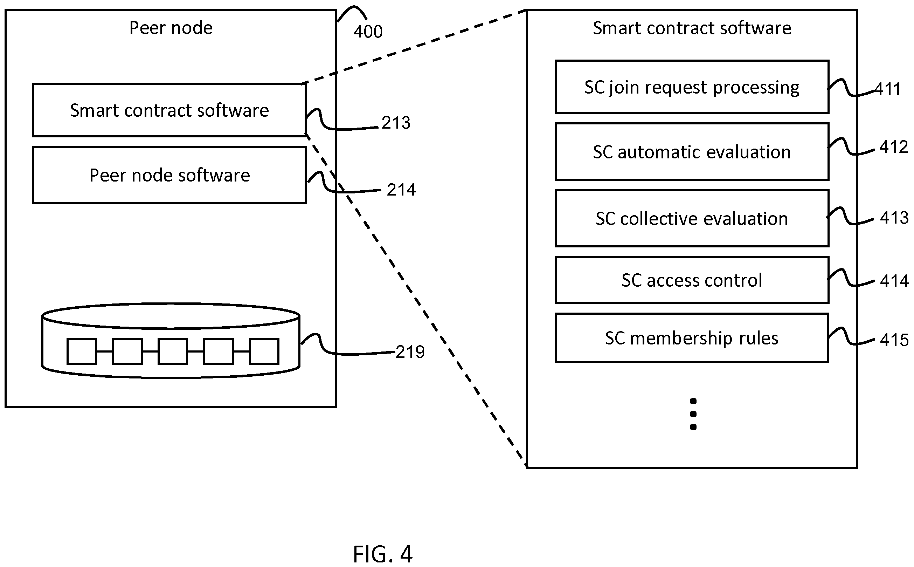

FIG. 4 provides a simplified functional view of a peer node configured to perform an evaluation process of a join request according to an example.

The evaluation of a join request evaluation is a smart contract-based evaluation. The evaluation may be performed using one or more smart contracts.

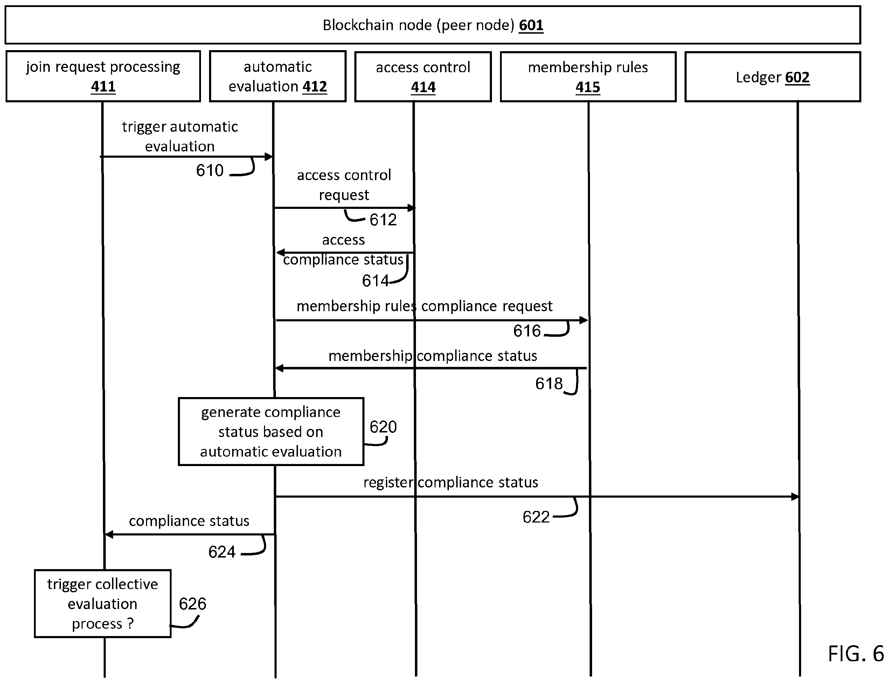

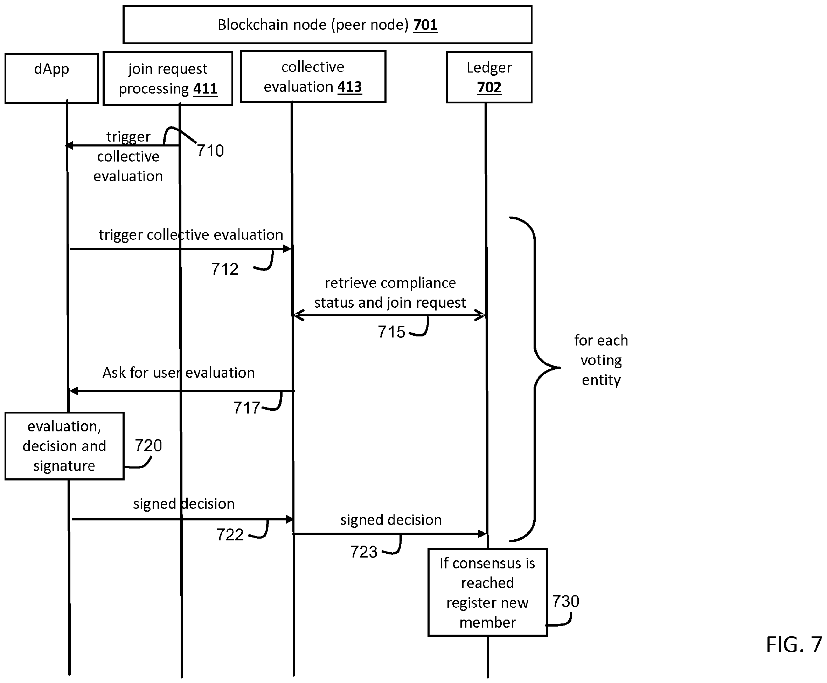

In the example of FIG. 4, the peer node includes:
- a smart contract 411 for receiving the join request and triggering the evaluation process, as described herein;
- a smart contract 412 for performing the automated evaluation of the join request, as described herein, for example by reference to FIG. 3 and FIG. 6;
- a smart contract 413 for performing the collective evaluation of the join request, as described herein, for example by reference to FIG. 3 and FIG. 7;
- a smart contract 414 for performing access control and allocation of rights, as described herein, for example by reference to FIG. 3 and FIG. 6;
- a smart contract 415 for checking compliance with the membership rules, as described herein, for example by reference to FIG. 3 and FIG. 6.

In this example, the smart contract 411 may trigger the automated evaluation by calling the smart contract 412 and/or the collective evaluation by calling the smart contract 413. The smart contract 412 (or alternatively the smart contract 411) may itself, during the automated evaluation process, call the smart contract 414 for performing access control and allocation of rights and the smart contract 415 for checking compliance with the membership rules.

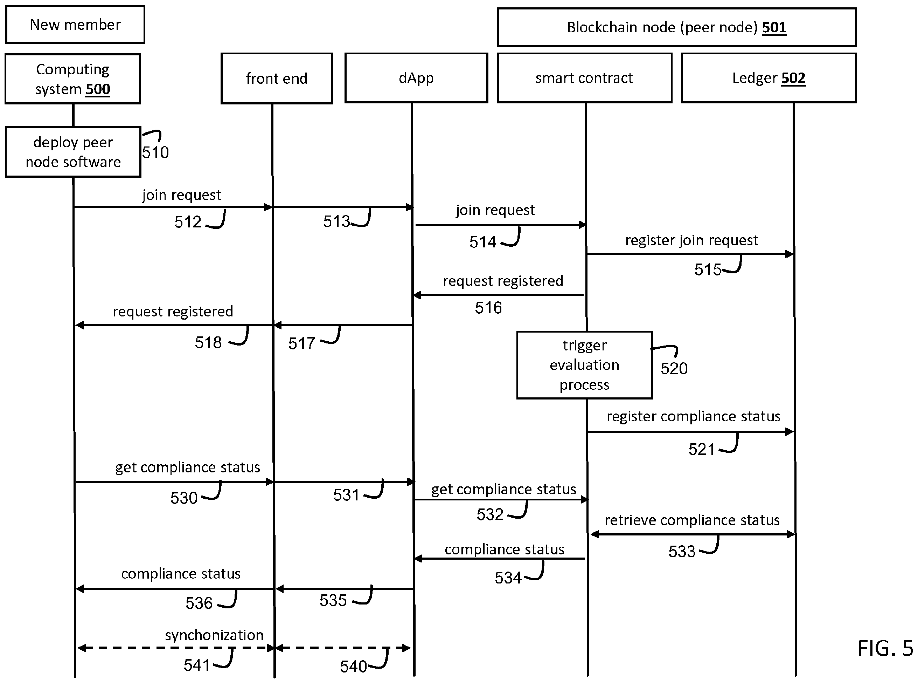

FIG. 5 is a flowchart illustrating a method for processing a join request for joining a blockchain network by connecting a new node (e.g., a peer node) to the blockchain network according to an example.

While the steps are described in a sequential manner, the person skilled in the art will appreciate that some steps may be omitted, combined, performed in different order and / or in parallel.

This method involves a blockchain node 501 (e.g., a peer node) in a blockchain network, a distributed application (hereafter the dApp) with its front end (e.g., a web page), and a computing system 500 of a new member (i.e., the requesting entity), The blockchain node 501 (e.g., a peer node) has access to a local copy of a ledger 502.

In step 510, the computing system 500 deploys a peer node software to be able to communicate with a blockchain node 501.

In steps 512-514, the computing system 500 (i.e. the peer node software) sends a join request to the blockchain node 501 through the front end and the dApp. The join request is received by a smart contract that registers (step 515) the join requests in the ledger 502. The smart contract may be a smart contract 411 for receiving the join request and triggering the evaluation process, as described by reference to FIG. 4.

In step 516, the smart contract replies to the received join request by sending a message indicating that the join request has been registered. The message is transmitted to the computing system 500 through the dApp and the front end in steps 517-518.

In step 520, the smart contract triggers an evaluation process for determining whether the join request complies with memberships rules and obtain results of the evaluation process. The results may include a compliance status, indicating if the join request complies or not with the memberships rules.

In step 521, the results of the evaluation process, or at least the compliance status, are registered in the ledger 502.

The storage of this compliance status is immutable and auditable. This feature makes the membership process transparent and indisputable for all consortium members.

In steps 530-532, the computing system 500 (i.e., the peer node software) sends a compliance status request to the blockchain node 501 through the front end and the dApp to get the compliance status. The compliance status request is received by the smart contract.

In step 533, the smart contract retrieves the compliance status from the ledger.

In steps 534-536, the compliance status is sent by the smart contract to the computing system 500 through the dApp and the front end.

In step 540-541, synchronization between the blockchain node 501 and the computing system 500 takes place if the join request is accepted. The synchronization may include a synchronization of the ledger data with the peer node of the computing system 500, such that each the peer node in the computing system 500 possesses a current, synchronized copy of the ledger. The synchronization may include a configuration of access rights to data blocks of the ledger, rights to register transactions to read or write data blocks in the blockchain and/or to channels of the blockchain network to allow the computing system 500 based on the requirements in the join request. The synchronization may include a configuration of the computing system 500 with smart contract software.

Once the synchronization is completed, the peer node in the computing system 500 is operatively connected to the blockchain network.

FIG. 6 is a flowchart illustrating a method for performing an automated evaluation of a join request for joining a blockchain network according to an example.

While the steps are described in a sequential manner, the person skilled in the art will appreciate that some steps may be omitted, combined, performed in different order and / or in parallel.

The steps of the method may be executed during step 520 of the method described by reference to FIG. 5.

This method involves a blockchain node 601 (e.g., a peer node) 601 in a blockchain network. The blockchain node 601 has access to a local copy of a ledger 602. The blockchain node 601 is configured with smart contracts 411, 412, 414 and 415 corresponding to those described by reference to FIG. 4.

In step 610, the smart contract 411 triggers an automated evaluation of a join request by calling or sending a request to the smart contract 412 configured for automated evaluation.

In step 612, the smart contract 412 sends a request to the smart contract 414 to request evaluation of the join request from access control point of view: determination of the rights (to the blockchain and/or the channels) to be allocated to the new member and whether these rights comply with an access policy defined for the blockchain and/or the channels.

In step 614, the smart contract 414 provides feedback to the smart contract 412. The feedback may include an access compliance status resulting from evaluation performed in step 612.

In step 616, the smart contract 412 sends a request to the smart contract 415 to request evaluation of the join request from membership rules point of view: determination of the functions that the new member wants to have in the blockchain network and if these functions comply with the membership rules.

In step 618, the smart contract 415 provides feedback to the smart contract 412. The feedback may include a membership compliance status resulting from the evaluation performed in step 616.

In step 620, the smart contract 412 generates a compliance status for the join request as the result of the automated evaluation performed in steps 612 and 616.

In step 622, the smart contract 412 registers the compliance status in the ledger 602.

In step 624, the smart contract 412 may send the compliance status to the smart contract 411. The compliance status may indicate whether the join request is accepted, rejected or whether collective evaluation is appropriate or requested.

In step 626, the smart contract 411 determines, on the basis of the compliance status, whether a collective evaluation needs to be triggered.

FIG. 7 is a flowchart illustrating a method for performing a collective evaluation of a join request for joining a blockchain network according to an example.

While the steps are described in a sequential manner, the person skilled in the art will appreciate that some steps may be omitted, combined, performed in different order and / or in parallel.

The steps of the method of FIG. 7 may be executed during step 520 of the method described by reference to FIG. 5.

The steps of the method of FIG. 7 may be executed after step 626 of the method described by reference to FIG. 6 when it is determined that a collective evaluation need to be performed.

This method involves a blockchain node 701 (e.g., a peer node) in a blockchain network. The blockchain node 701 has access to a local copy of a ledger 702. The blockchain node 701 is configured with smart contracts 411 and 413 corresponding to those described by reference to FIG. 4. The blockchain node 701 may be reached through a distributed application (hereafter the dApp) and a front end (e.g., a web page).

In step 710, the smart contract 411 of a peer node having received the join request triggers collective evaluation through the dApp.

Steps 712 to 723 correspond to an evaluation performed by a voting user and carried out by a peer node of the voting user. Steps 712 to 723 are performed for each voting user.

In step 712, the dApp sends a request to the smart contract 413 to trigger a manual evaluation by the voting user.

In step 715, the smart contract 413 retrieve the join request and its compliance status resulting from an automated evaluation of the join request from the ledger 702.

In step 717, the smart contract 413 asks to the dApp to perform an evaluation by the voting user.

In step 720, the voting user review the join request and the requirements of the new member. The voting user takes a decision on the join request and signs the decision using his digital certificate. The decision may include reasons for acceptance / rejection of the join request and/or reasons for acceptance / rejection of one or more of the requirements of the join request.

In step 722, the signed decision is transmitted by the dApp to the smart contract 413.

In step 723, the smart contract 723 stores the signed decision in the ledger 702.

The storage of this signed decision is immutable and auditable. This feature makes the joining process transparent and indisputable for all consortium members.

Once all voting users have taken a decision, a final decision is taken based on the respective decisions of the voting users.

For example, the results of the collective evaluation process include a number of users having accepted or rejected the join request and the decision is taken based at least on these results.

The results of the collective evaluation process may be submitted to an orderer node configured to take the final decision for the blockchain network.

A consensus rule may be applied to the results to decide whether to accept or reject the join request. The consensus rule may be for example that a majority of voting users must have accepted the join request or a given percentage of voting users must have accepted the join request. Alternatively, the consensus rule may be for example that all users must have accepted the join request. The consensus may define weights given to the voting users or may define that all the voting users have the same weight.

If a consensus has been reached by the voting users, for example if a majority of the voting users have accepted the join request, in step 730, the new member is registered in the ledger 702.

A synchronization with the computing system of the new member may then be performed as discloses herein to connect the peer node of the computing system of the new member to the blockchain network.

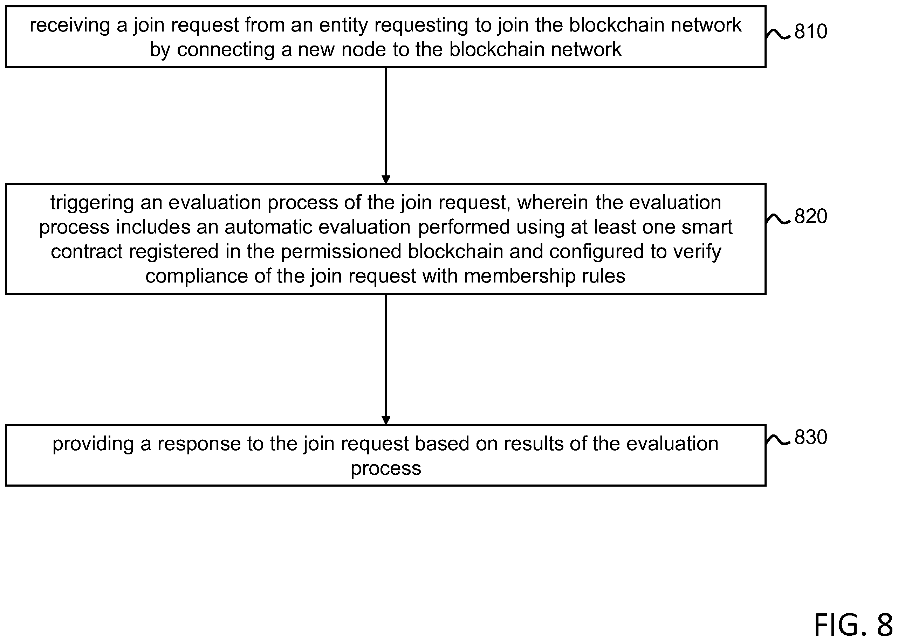

FIG. 8 is a flowchart illustrating a method for processing a join request for joining a blockchain network according to an example.

While the steps are described in a sequential manner, the person skilled in the art will appreciate that some steps may be omitted, combined, performed in different order and / or in parallel.

This method involves a first computing system in a blockchain network. The first computing system is configured for hosting at least one node (e.g., a peer node) of a blockchain network based on a permissioned blockchain. The first computing system hosting the node of the blockchain network is in operative communication with a second computing system of an entity requesting to join the blockchain network by connecting a new node to the blockchain network. The second computing system may host the new node (e.g., a peer node) to be connected to the blockchain network.

In step 810, the first computing system receives a join request from an entity requesting to join the blockchain network by connecting a new node to the blockchain network.

The first computing system may receive (e.g., with the join request or in the join request) a digital certificate, identity information for the entity and requirements of the new node to be created.

The requirements comprising at least one of
- rights to perform transactions in the blockchain network;
- rights to perform a consensus algorithm for validating transactions in the blockchain network;
- rights to register transactions to read or write data blocks in the blockchain;
- an identification of one or more channels in the blockchain network to which the new node requests access;
- rights to add ordering service endpoints to participate to consensus.

In step 820, the first computing system triggers an evaluation process of the join request. The evaluation process includes an automated evaluation performed using at least one smart contract registered in the permissioned blockchain and configured to verify compliance of the join request with membership rules. The evaluation process may optionally include a collective evaluation process involving users of nodes of the blockchain network.

The memberships rules may be related to rights and functions in the blockchain network requested by the requesting entity and/or to the performances of a second computing system configured to host the new node.

The evaluation process may include a verification of the identity of the entity on the basis of identity information and/or a validity check of the digital certificate.

During the evaluation process, the first computing system may
- submit the join request to a collective evaluation process involving users of nodes of the blockchain network;
- takes a decision to accept or reject the join request based on the results of the evaluation process including results of the automated evaluation and results of the collective evaluation process.

The join request may be submitted to the collective evaluation process only when the results of the automated evaluation indicate that the join request is not acceptable or needs further evaluation.

The collective evaluation process may be performed using at least one smart contract registered in the permissioned blockchain.

The results of the collective evaluation process may include a number of users having accepted or rejected the join request and the decision is taken based at least on the results of the collective evaluation process and on a consensus rule to be met to accept the join request.

During the evaluation process, the first computing system may accept the join request if the results of the evaluation process indicate that the join request is acceptable.

If the join request is acceptable, then the first computing system may
- allocate rights to the entity on the permissioned blockchain;
- allocate rights on the one or more channels to the entity;
- send to the second computing system of the entity, a copy of a ledger of the blockchain network;
- send, to the second computing system, a smart contract software or a consensus algorithm code to be run at the second computing system.

If the join request is acceptable, then the first computing system may further:
- send, to the second computing system of the entity, private data to be stored in a local private database of the new node.

The first computing system may generate a report of the evaluation process. The report may include results of the evaluation process that itself includes results of the automated evaluation, and, if the collective evaluation process is carried out, the results of the collective evaluation process. The report may include for example assessments performed by the at least one smart contract during the evaluation process and reasons for compliance or non-compliance with membership rules.

The first computing system may register the report in a data block in a ledger of the permissioned blockchain.

In step 830, the first computing system provides a response to the join request based on the results of the evaluation process.

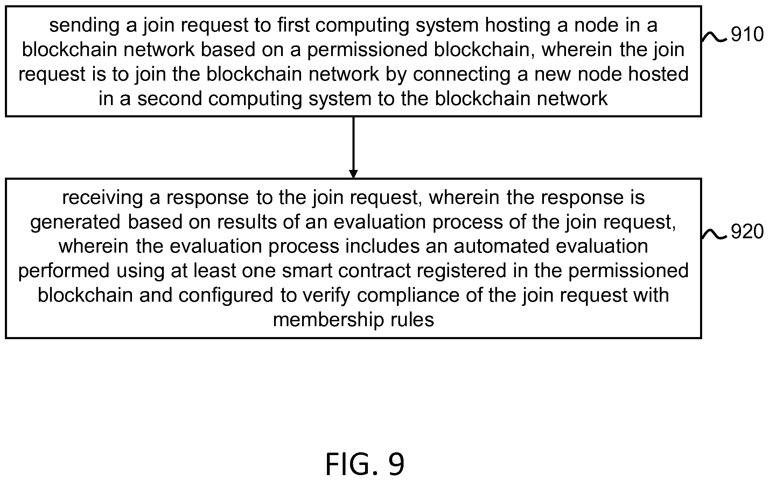

FIG. 9 is a flowchart illustrating a method for joining to a blockchain network according to an example.

While the steps are described in a sequential manner, the person skilled in the art will appreciate that some steps may be omitted, combined, performed in different order and / or in parallel.

This method involves a first computing system in a blockchain network. The first computing system is configured for hosting at least one node (e.g., a peer node) of a blockchain network based on a permissioned blockchain. The first computing system hosting the node of the blockchain network is in operative communication with a second computing system of an entity requesting to join the blockchain network by connecting a new node to the blockchain network. The second computing system may host the new node (e.g., a peer node) to be connected to the blockchain network.

In step 910, the second computing system sends a join request to a node in a blockchain network based on a permissioned blockchain. The join request is to join the blockchain network by connecting a new node hosted by the second computing system to the blockchain network.

In step 920, the second computing system receives a response to the join request. The response is generated based on results of an evaluation process of the join request. The evaluation process is performed using at least one smart contract registered in the permissioned blockchain and configured to verify compliance of the join request with membership rules.

If the join request is accepted, the second computing system may
- receive a copy of a ledger of the blockchain network; and
- store the copy of the ledger in the computing system.

If the join request is accepted, the second computing system may
- receive a smart contract software or a consensus algorithm code after the joined request is accepted;
- operatively communicate with one or more nodes in the blockchain network; and
- execute the smart contract software or the consensus algorithm code.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also, some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

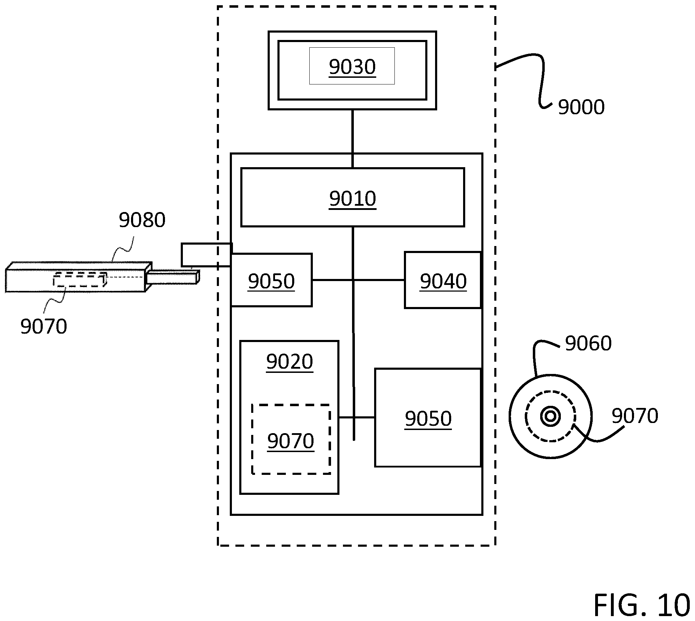

FIG. 10 illustrates an example embodiment of an apparatus 9000, as example computing device. The apparatus 9000 may be configured to perform one or more functions of a computing device or computing system disclosed herein. The apparatus 9000 may be configured to perform one or more or all steps of any method disclosed herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc) connected to the processor and configured to communicate via wired / non wired communication link(s). The apparatus 9000 may include user interfaces 9030 (e.g., keyboard, mouse, display screen, etc) connected with the processor. The apparatus 9000 may further include one or more media drives 9050 for reading a computer-readable storage medium (e.g., digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random-access memory (RAM), cache memory, non-volatile memory, backup memory (e.g., programmable or flash memories), read-only memory (ROM), a hard disk drive (HDD), a solid-state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid-state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to the considered function(s). The means may include circuitry (e.g., processing circuitry) configured to perform the considered function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g., a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

## Claims

1. A first computing system configured for hosting at least one node of a blockchain network based on a permissioned blockchain, the first computing system comprising means for
receiving (810) a join request from an entity requesting to join the blockchain network by connecting a new node to the blockchain network;
triggering (820) an evaluation process of the join request, wherein the evaluation process includes an automated evaluation performed using at least one smart contract registered in the permissioned blockchain and configured to verify compliance of the join request with membership rules;
providing (830) a response to the join request based on results of the evaluation process.

2. The first computing system of claim 1, wherein the memberships rules are related to rights and functions in the blockchain network requested by the requesting entity and/or to the performances of a second computing system hosting the new node.

3. The first computing system of claim 1 or 2, comprising means for receiving a digital certificate, identity information for the entity and requirements of the new node to be created, the requirements comprising at least one of
- rights to perform transactions in the blockchain network;
- rights to perform a consensus algorithm for validating transactions in the blockchain network;
- rights to register transactions to read or write data blocks in the blockchain;
- an identification of one or more channels in the blockchain network to which the new node requests access;
- rights to add ordering service endpoints to participate to consensus.

4. The first computing system of any claim 1 to 3, wherein the evaluation process includes at least one of a verification of the identity of the entity on the basis of identity information or a validity check of the digital certificate.

5. The first computing system of any of claims 1 to 4, comprising means for accepting the join request if the results of the evaluation process indicates that the join request is acceptable;
allocating rights on the permissioned blockchain to the entity;
allocating rights on the one or more channels to the entity;
sending to a second computing system of the entity a copy of a ledger of the blockchain network;
sending, to the second computing system of the entity, a smart contract software or a consensus algorithm code to be run at the second computing system.

6. The first computing system of any of claims 1 to 5, comprising means for sending, to the second computing system, private data to be stored in a local private database of the new node.

7. The first computing system of any of claim 1 to 6, comprising means for submitting the join request to a collective evaluation process involving users of nodes of the blockchain network, the collective evaluation process being performed using at least one smart contract registered in the permissioned blockchain;
taking a decision to accept or reject the join request based on the results of the evaluation process including results of the collective evaluation process and results of the automated evaluation.

8. The first computing system of claim 7, wherein the join request is submitted to the collective evaluation process only when the results of the automated evaluation indicates that the join request is not acceptable or needs further evaluation.

9. The first computing system of claim 7 or 8, wherein the results of the collective evaluation process include a number of users having accepted or rejected the join request and the decision is taken based at least on the results of the collective evaluation process and on a consensus rule to be met to accept the join request.

10. The first computing system of any of claim 1 to 9, comprising means for generating a report of the evaluation process including the results of assessments performed by the at least one smart contract during the evaluation process and reasons for compliance or non-compliance with membership rules; and
registering the report in a data block in a ledger of the permissioned blockchain.

11. A second computing system comprising means for
sending (910) a join request to a first computing system, the first computing system hosting a node of a blockchain network based on a permissioned blockchain, wherein the join request is to join the blockchain network by connecting a new node hosted by the second computing system to the blockchain network;
receiving (920), from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules.

12. The second computing system of claim 11, comprising means for
receiving a copy of a ledger of the blockchain network if the joined request is accepted; storing the copy of the ledger in the second computing system.

13. The second computing system of claim 11 or 12, comprising means for
receiving a smart contract software or a consensus algorithm code if the joined request is accepted;
operatively communicating with one or more nodes in the blockchain network; and executing the smart contract software or the consensus algorithm code.

14. A method for use by a first computing system hosting at least one node in a blockchain network based on a permissioned blockchain, the method comprising
receiving (810) a join request from an entity requesting to join the blockchain network by connecting a new node to the blockchain network;
triggering (820) an evaluation process of the join request, wherein the evaluation process includes an automated evaluation performed using at least one smart contract registered in the permissioned blockchain and configured to verify compliance of the join request with membership rules;
providing (830) a response to the join request based on results of the evaluation process.

15. A method comprising
sending (910) a join request to a first computing system, the first computing system hosting a node of a blockchain network based on a permissioned blockchain, wherein the join request is to join the blockchain network by connecting a new node hosted by a second computing system to the blockchain network;
receiving (920), from the first computing system, a response to the join request, wherein the response is generated based on results of an evaluation process of the join request, wherein the evaluation process includes an automated evaluation performed using at least one smart contract registered in the permissioned blockchain and configured to verify compliance of the join request with membership rules.
